# EUROPEAN PATENT APPLICATION

(11) **EP 4 559 545 A1**
(43) Date of publication of application: **28.05.2025**
(21) Application number: 23386121.0
(22) Date of filing: 27.11.2023
(51) Int. Cl.: A63F 13/211, A63F 13/213, A63F 13/215, A63F 13/217, A63F 13/424

(54) **DATA PROCESSING APPARATUS AND METHOD**

(71) Applicant: Sony Interactive Entertainment Inc., Tokyo 108-0075 (JP)
(72) Inventor: LEUNG, Jun, London W1F 7LP (GB); SCOTT, Harvey, London W1F 7LP (GB); MICHAILIDIS, Lazaros, London W1F 7LP (GB); EDER, Michael, London W1F 7LP (GB)
(74) Representative: D Young & Co LLP

(57) **Abstract**

A data processing apparatus for executing a video game, the data processing apparatus comprising circuitry configured to: receive a signal from a video game control apparatus, the signal representing an output of a sensor of the video game control apparatus for measuring a physical parameter in an environment of the video game control apparatus; based on the received signal, control one or more audio and/or video output levels of the video game.

## Description

### BACKGROUND

### Field of the Disclosure

This disclosure relates to a data processing apparatus and method.

### Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

During video gaming, it is desirable for a player to be able to easily control the visual and/or audio output of the game depending on their environment and personal preferences. For example, for audio output, a user may have a preferred perceived volume level for gaming and desire this same perceived volume level across multiple gaming sessions. In another example, for visual output, a user may have a preferred perceived brightness level for gaming and desire this same perceived brightness level across multiple gaming sessions. This consistency in perceived audio and/or visual output may be desirable for the user even if the real world environment (e.g. characteristics of the room the user is located in while playing) changes.

In general, a user will need to manually adjust the audio and/or visual output (e.g. by manually adjusting volume and/or brightness settings on a games console and/or display device) in order to achieve this consistency. This can be cumbersome and requires an interruption of gameplay. There is therefore a desire to alleviate this problem.

### SUMMARY

The present disclosure is defined by the claims.

### BRIEF DESCRIPTION OF THE DRAWINGS

Non-limiting embodiments and advantages of the present disclosure are explained with reference to the following detailed description taken in conjunction with the accompanying drawings, wherein:
Fig. 1 schematically shows an example entertainment system;
Figs. 2A and 2B schematically show example components associated with the entertainment system;
Fig. 3 schematically shows an example gaming controller;
Fig. 4 schematically shows a relationship between a position of a user and a position of a loudspeaker device;
Fig. 5 shows a first example method;
Figs. 6A to 6C show example outputs of a motion sensor of a gaming controller; and
Fig. 7 shows a second example method.

Like reference numerals designate identical or corresponding parts throughout the drawings.

### DETAILED DESCRIPTION OF THE EMBODIMENTS

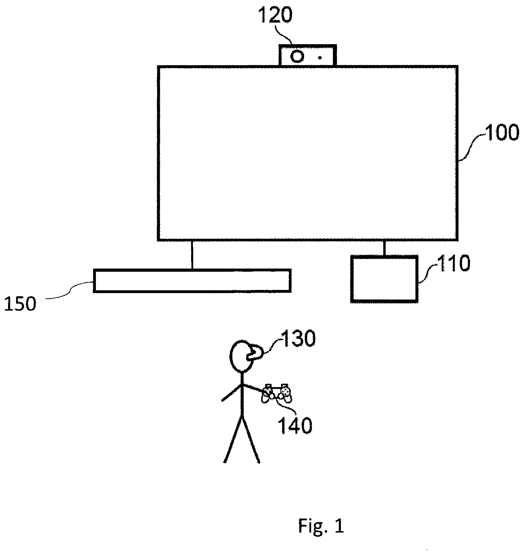

Fig. 1 schematically illustrates an entertainment system suitable for implementing one or more of the embodiments of the present disclosure. Any suitable combination of devices and peripherals may be used to implement embodiments of the present disclosure, rather than being limited only to the configuration shown.

A display device 100 (e.g. a television or monitor), associated with a games console 110, is used to display content to one or more users. A user is someone who interacts with the displayed content, such as a player of a game, or, at least, someone who views the displayed content. A user who views the displayed content without interacting with it may be referred to as a viewer. This content may be a video game, for example, or any other content such as a movie or any other video content. The games console 110 is an example of a content providing device or entertainment device; alternative, or additional, devices may include computers, mobile phones, set-top boxes, and physical media playback devices, for example. In some embodiments the content may be obtained by the display device itself - for instance, via a network connection or a local hard drive.

One or more video and/or audio capture devices (such as the integrated camera and microphone 120) may be provided to capture images and/or audio in the environment of the display device. A loudspeaker device 150 (e.g. sound bar or loudspeaker device integrated with display device 100) for outputting audio generated by the games console 110 is also provided. While shown as a separate unit in Fig. 1, it is considered that such devices (in particular the video and/or audio capture device(s) and/or loudspeaker device 150) be integrated within one or more other units (such as the display device 100 or the games console 110 in Fig. 1).

In some implementations, an additional or alternative display device such as a head-mountable display (HMD) 130 may be provided. Such a display can be worn on the head of a user, and is operable to provide augmented reality or virtual reality content to a user via a near-eye display screen. A user may be further provided with a video game controller 140 which enables the user to interact with the games console 110. This may be through the provision of buttons, motion sensors, cameras, microphones, and/or any other suitable method of detecting an input from or action by a user.

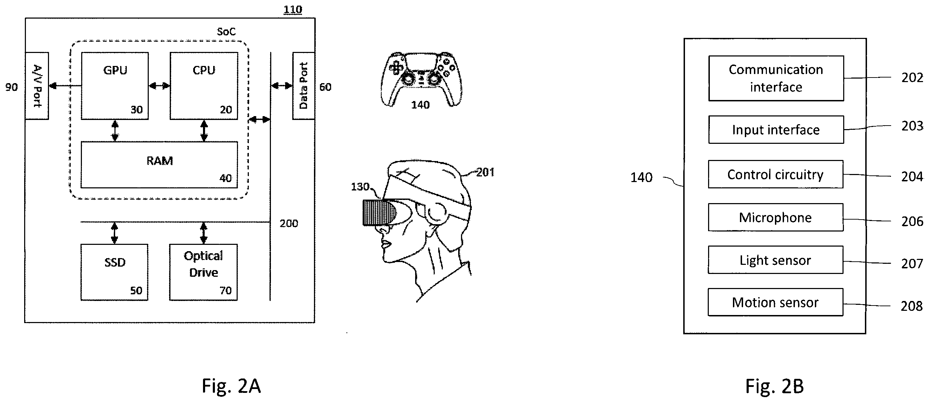

Fig. 2A shows an example of the games console 110. The games console 110 is an example of a data processing apparatus.

The games console 110 comprises a central processing unit or CPU 20. This may be a single or multi core processor, for example comprising eight cores. The games console also comprises a graphical processing unit or GPU 30. The GPU can be physically separate to the CPU, or integrated with the CPU as a system on a chip (SoC).

The games console also comprises random access memory, RAM 40, and may either have separate RAM for each of the CPU and GPU, or shared RAM. The or each RAM can be physically separate, or integrated as part of an SoC. Further storage is provided by a disk 50, either as an external or internal hard drive, or as an external solid state drive (SSD), or an internal SSD.

The games console may transmit or receive data via one or more data ports 60, such as a universal serial bus (USB) port, Ethernet ^{®} port, WiFi ^{®} port, Bluetooth ^{®} port or similar, as appropriate. It may also optionally receive data via an optical drive 70.

Interaction with the games console is typically provided using one or more instances of the controller 140. In an example, communication between each controller 140 and the games console 110 occurs via the data port(s) 60.

Audio/visual (A/V) outputs from the games console are typically provided (e.g. to display device 100 and/or loudspeaker device 150) through one or more A/V ports 90, or through one or more of the wired or wireless data ports 60. The A/V port(s) 90 may also receive audio/visual signals output by the integrated camera and microphone 120, for example. The microphone is optional and/or may be separate to the camera. Thus, the integrated camera and microphone 120 may instead be a camera only. The camera may capture still and/or video images.

Where components are not integrated, they may be connected as appropriate either by a dedicated data link or via a bus 200.

As explained, examples of a device for displaying images output by the game console 110 are the display device 100 and the HMD 130. The HMD is worn by a user 201. In an example, communication between the display device 100 and the games console 110 occurs via the A/V port(s) 90 and communication between the HMD 130 and the games console 110 occurs via the data port(s) 60.

Fig. 2B shows some example components of the controller 140. The controller comprises a communication interface 202 for transmitting wireless signals to and/or receiving wireless signals from the games console 110 (e.g. via data port(s) 60) and an input interface 203 for receiving input from the user. The controller also comprises one or more of a microphone 206 for detecting sounds in the environment of the controller, a light sensor 207 for detecting light levels in the environment of the controller and a motion sensor 208 for detecting motion of the controller. In this example, all of the microphone 206, light sensor 207 and motion sensor 208 are present. The communication interface 202, input interface 203, microphone 206, light sensor 207 and motion sensor 208 are controlled by the control circuitry 204.

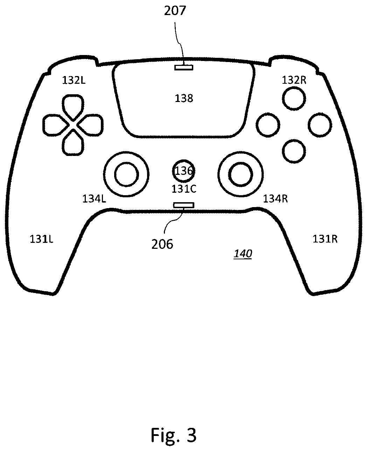

The input interface 203 comprises buttons, joysticks and/or triggers or the like operable by the user (such as those exemplified in Fig. 3). The microphone 206 comprises, for example, a transducer for detecting sounds and converting them to electrical signals. The light sensor 207 is an ambient light sensor comprising, for example, one or more of a phototransistor, photodiode or photonic integrated circuit which outputs an electrical signal which changes depending on the illuminance of incident light. The motion sensor 208 measures acceleration and/or rotation of the controller in one or more translation and/or rotation axes. For example, the motion sensor 208 may comprise three accelerometers for measuring acceleration in each of the x, y and z directions and three gyrometers for measuring rotation about each of the x, y and z directions.

Figure 3 illustrates an example of a controller 140. Such a controller typically has two handle sections 131L, 131R and a central body 131C. Various controls are distributed over the controller, typically in local groups. Examples include a left button group 132L, which may comprise directional controls and/or one or more shoulder buttons, and similarly right button group 132R, which may comprise function controls and/or one or more shoulder buttons. The controller also includes left and/or right joysticks 134L, 134R, which may optionally also be operable as buttons by pressing down on them.

The controller (typically in a central portion of the controller) may also comprise one or more system buttons 136, which typically cause interaction with an operating system of the entertainment device rather than with a game or other application currently running on it. Such buttons may summon a system menu or allow for recording or sharing of displayed content, for example. Furthermore, the controller may comprise one or more other elements such as a touchpad 138, a light for optical tracking (not shown), a screen (not shown), haptic feedback elements (not shown), and the like. This controller also comprises each of the microphone 206, light sensor 207 and motion sensor 208. Fig. 3 shows outer portions of the microphone 206 and light sensor 207 visible on the controller 140 (to enable environmental sound and light, respectively, to be detected). The motion sensor 208, in this example, is contained within the housing of the controller and therefore not visible.

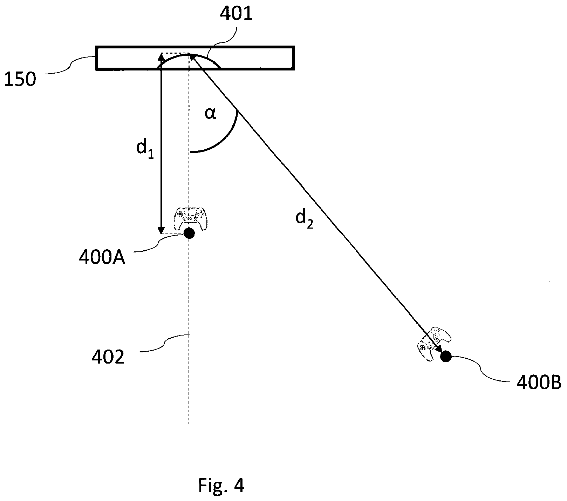

Fig. 4 illustrates a scenario in which volume adjustment may be desirable for a user when experiencing audio output from the loudspeaker device 150. Fig. 4 is a simplified example to demonstrate the principles of the present technique. It will be appreciated that, in reality, the relationship between the perceived volume of audio output by the loudspeaker device and different positions with respect to the loudspeaker device may be more complex. The present technique, however, is effective no matter the nature of this relationship.

Standard output volume (standard volume) refers to a volume output by the loudspeaker device 150 as measured at a predetermined position (location) with respect to a diaphragm 401 of the loudspeaker device (e.g. positioned directly in front of the diaphragm at a distance of 1 metre). Perceived output volume (perceived volume) is the volume of the loudspeaker device as measured at different positions to the predetermined position. Both the standard volume and perceived volume are measurable in decibels, dB, for example.

The perceived volume at a given position is reduced with respect to the standard volume the further that position is from the predetermined position in a direction away from the diaphragm 401. Furthermore, the greater the angular distance of the given position with respect to a position directly in front of the diaphragm 401 (the angular distance ranging from 0° when directly in front of the diaphragm to 180° when directly behind the diaphragm), the lower the perceived volume at that position. Positions directly in front of the diaphragm 401 are on the line 402 normal to the centre of the surface of the diaphragm.

Thus, considering Fig. 4, a first location 400A is located a distance d₁ with an angular distance (in degrees) of 0 with respect to the diaphragm 401 (since it is directly in front of the diaphragm). A second location 400B is located a distance d₂ with a non-zero angular distance (in degrees) of α with respect to the diaphragm 401, wherein d₂ > d₁. This means that, for a given standard volume, the perceived volume at the first location 400A will be greater than the perceived volume at the second location 400B.

Conventionally, to obtain a consistent perceived volume, the user must therefore manually adjust the standard volume of the depending on their location in the room. In particular, if the user moves from the first location 400A to the second location 400B, the user will need to increase the standard volume to experience a consistent perceived volume. Conversely, if the user moves from the second location 400B to the first location 400A, the user will need to decrease the standard volume to experience a consistent perceived volume. This is cumbersome to the user and may require an interruption of gameplay to manually adjust the standard volume.

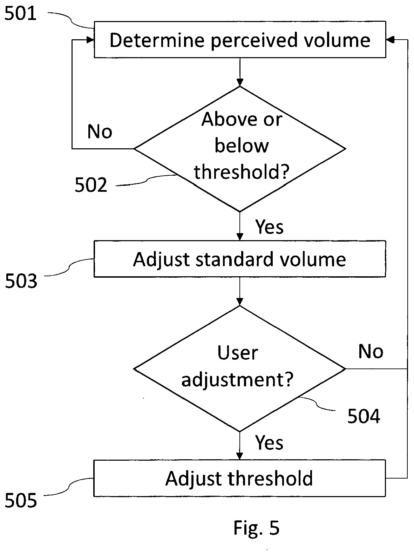

Fig. 5 shows a first example according to the present technique in which the standard volume of video game audio output by the loudspeaker device 150 is automatically adjusted based on detection of the perceived volume by the microphone 206 of the controller 140. The controller 140 is held by the user when playing the video game. The position of the controller 140 thus corresponds to the position of the user and the perceived volume detected by the microphone 206 corresponds to the perceived volume experienced by the user. According to Fig. 5, the occurrence and extent of adjustment is also itself adjusted based on feedback from the user. The method of Fig. 5 is executed by the CPU 20 and/or GPU 30, for example. The method is continually executed while the user is playing the video game.

At step 501, the perceived volume of the video game audio output by the loudspeaker device 150 is determined.

In an example, this is determined using a real time continuous signal received from the controller 140 representing ambient sound (including the video game audio) detected by the microphone 206 as the user plays the video game.

In an example, a signal representing the video game audio is isolated from the received signal representing the ambient sound. The isolation of the signal representing the video game audio occurs, for example, by extracting only frequencies known to be present in the output video game audio (these being determined, for example, by performing a Fast Fourier Transform, FFT, on the current video game audio output by the games console 110 to the loudspeaker device 150). This helps reduce the effect of unrelated ambient noise on the automated perceived volume control.

In an example, there is a predetermined relationship between the power of the isolated signal and the perceived volume of the video game audio represented by the isolated signal. This is based on previously-determined experimental data (e.g. relating the power of the isolated signal transmitted by the controller to a separate noise measurement at the location of the controller) stored in a lookup table or the like, for example. This allows the perceived volume of the video game at the location of the controller 140 to be determined.

At step 502, it is determined whether the perceived volume is above or below a predetermined upper or lower threshold, respectively. The upper and lower thresholds may be the same or may be different. Initially, the thresholds are pre-set thresholds (corresponding to the comfort of a predetermined user considered to be representative of an average user, for example). These are then adjusted based on automated feedback from the user (as described below). In an example, the upper threshold is 70 dB and the lower threshold is 50 dB.

If the perceived volume is not above the upper threshold or below the lower threshold, the method returns to step 501. On the other hand, if perceived volume is above the upper threshold or below the lower threshold, the method proceeds to step 503.

At step 503, the games console 110 cause the standard volume output by the loudspeaker device 150 to be adjusted such that the perceived volume (which is still being determined based on the real time continuous signal received from the controller 140) is no longer above the upper threshold or below the lower threshold. For example, if the upper threshold is 70 dB and the perceived volume is above this value, the standard volume is adjusted until the perceived volume is less than or equal to 70 dB. As another example, if the lower threshold is 50 dB and the perceived volume is below this value, the standard volume is adjusted until the perceived volume is greater than or equal to 50 dB. The games console 110 causes the standard volume output by the loudspeaker device 150 to be adjusted via a volume control signal transmitted to the loudspeaker device 150 (for example, via a Consumer Electronics Control (CEC) interface of a High Definition Multimedia Interface (HDMI) connection between the games console 110 and loudspeaker device 150). The method then proceeds to step 504.

The standard volume is thus automatically adjusted to bring the perceived volume into a range considered to be comfortable for the average user based on sound detected by the microphone 206 of the controller 140. User comfort is therefore maintained without the user needing to manually adjust the volume, thereby improving user convenience.

A user may, however, have comfort needs which do not align with those of an average user. For example, a user may prefer the volume to be louder on average and may thus prefer the upper and lower thresholds to be increased. Alternatively, a user may prefer the volume to be quieter on average and may thus prefer the upper and lower thresholds to be decreased. The games console 110 (via a suitable settings menu or the like) may enable the upper and lower thresholds to be manually adjusted by the user. However, again, making these manual adjustments may be inconvenient for the user.

At step 504, it is thus determined whether, within a predetermined time period after adjustment of the volume at step 503 (adjustment time period, e.g. 3, 5, 10 or 20 seconds), the user further instructs manual adjustment of the volume. If the volume is not manually adjusted within the adjustment time period, the method returns to step 501. However, if the user does manually adjust the volume within the adjustment time period, this indicates the upper and/or lower thresholds may not be suitable for the user. The upper and/or lower thresholds are therefore adjusted accordingly.

In one example, it is determined at step 502 that the perceived volume is above the upper threshold. The standard volume is therefore automatically decreased at step 503 to bring the perceived volume equal to the upper threshold. However, at step 504, it is determined that, within the adjustment time period, the user manually increases the volume again. The upper threshold is therefore increased to the perceived volume level after the manual volume increase. For example, if the upper threshold is 70 dB and the standard volume is manually increased so the perceived volume is 75 dB (after the initial automatic reduction to 70 dB), then the upper threshold is adjusted to 75 dB. In the future, automatic volume reduction will thus occur if the perceived volume is above 75 dB (rather than 70 dB).

In another example, it is determined at step 502 that the perceived volume is above the upper threshold. The standard volume is therefore automatically decreased at step 503 to bring the perceived volume equal to the upper threshold. However, at step 504, it is determined that, within the adjustment time period, the user manually further decreases the volume. The upper threshold is therefore decreased to the perceived volume level after the manual volume decrease. For example, if the upper threshold is 70 dB and the standard volume is manually decreased so the perceived volume is 65 dB (after the initial automatic reduction to 70 dB), then the upper threshold is adjusted to 65 dB. in the future, automatic volume reduction will thus occur if the perceived volume is above 65 dB (rather than 70 dB).

When the upper threshold is adjusted, the lower threshold may be kept the same or adjusted. For example, the lower threshold may be adjusted by a corresponding amount to the adjustment of the upper threshold. So, for instance, a 50 dB lower threshold will be increased by 5 dB to 55 dB in correspondence with a 5 dB increase of the upper threshold from 70 dB to 75 dB and decreased by 5 dB to 45 dB in correspondence with a 5 dB decrease of the upper threshold from 70 dB to 65 dB. By adjusting the lower threshold in this way, the interval between the upper and lower thresholds remains the same and thus takes into account that the current user appears to prefer a louder or quieter perceived volume than that indicated by the pre-set thresholds.

In another example, it is determined at step 502 that the perceived volume is below the lower threshold. The standard volume is therefore automatically increased at step 503 to bring the perceived volume equal to the lower threshold. However, at step 504, it is determined that, within the adjustment time period, the user manually further increases the volume. The lower threshold is therefore increased to the perceived volume level after the manual volume increase. For example, if the lower threshold is 50 dB and the standard volume is manually increased so the perceived volume is 55 dB (after the initial automatic increase to 50 dB), then the lower threshold is adjusted to 55 dB. In the future, automatic volume reduction will thus occur if the perceived volume is below 55 dB (rather than 50 dB).

In another example, it is determined at step 502 that the perceived volume is below the lower threshold. The standard volume is therefore automatically increased at step 503 to bring the perceived volume equal to the lower threshold. However, at step 504, it is determined that, within the adjustment time period, the user manually decreases the volume again. The lower threshold is therefore decreased to the perceived volume level after the manual volume decrease. For example, if the lower threshold is 50 dB and the standard volume is manually decreased so the perceived volume is 45 dB (after the initial automatic increase to 50 dB), then the lower threshold is adjusted to 45 dB. In the future, automatic volume reduction will thus occur if the perceived volume is below 45 dB (rather than 50 dB).

When the lower threshold is adjusted, the upper threshold may be kept the same or adjusted. For example, the upper threshold may be adjusted by a corresponding amount to the adjustment of the upper threshold. So, for instance, a 70 dB upper threshold will be increased by 5 dB to 75 dB in correspondence with a 5 dB increase of the lower threshold from 50 dB to 55 dB and decreased by 5 dB to 65 dB in correspondence with a 5 dB decrease of the lower threshold from 50 dB to 45 dB. By adjusting the upper threshold in this way, the interval between the upper and lower thresholds remains the same and thus takes into account that the current user appears to prefer a louder or quieter perceived volume than that indicated by the pre-set thresholds.

The method then returns to step 501 and the adjusted thresholds are used instead of the pre-set thresholds. The adjusted thresholds may be further adjusted in the same way as described for the pre-set thresholds. Data indicative of the most-recent adjusted thresholds may be saved and associated with a gaming profile of a user, for example, so they are available (and used) for a subsequent gaming session of the user.

In an example, to improve the effectiveness of the thresholds, the adjusted thresholds may take into account an average of manual adjustments of the volume by the user over time. For example, an adjusted threshold may be an average of all (or up to a predetermined number of the most recent) recorded perceived volume values after manual adjustment of the standard volume (the manual adjustment following automatic adjustment according to the relevant threshold in the way described).

For example, if the lower threshold is initially pre-set at 50 dB and, in a first instance, the standard volume is increased so the perceived volume is 52 dB (after manual adjustment to 50 dB), the lower threshold is adjusted to be 52 dB. Then, in a second, subsequent, instance, if the standard volume is decreased so the perceived volume is 44 dB (after manual adjustment to 52 dB), the lower threshold is adjusted to be the average (52 + 44) / 2 = 48 dB. Then, in a third, subsequent, instance, if the standard volume is increased so the perceived volume is 54 dB (after manual adjustment to 48 dB), the lower threshold is adjusted to be the average (52 + 44 + 54) / 3 = 50 dB, and so on. The threshold is thus adjusted over time based on the average manual volume adjustments by the user, thereby allowing the threshold to be tailored to the likely noise requirements of the user.

In an example, different video games (and/or different video game genres) may be associate with different upper and/or lower thresholds (both pre-set thresholds and adjusted thresholds as the user plays a given video game and/or video game genre). For example, horror or thriller video games which may scare an unsuspecting user if the volume is too loud may have lower threshold(s) than family or action adventure video games. If a player of a horror video game prefers the perceived volume to be higher and thus manually adjusts the volume during the game, the threshold(s) will be increased in the way described for that particular video game and/or video game genre. Similarly, if a player of an action adventure video game prefers the perceived volume to be lower and thus manually adjusts the volume during the game, the threshold(s) will be decreased in the way described for that particular video game and/or video game genre. The games console 110 may store and update the threshold(s) associated with different video game titles and/or video game genres in a lookup table or the like. Video game title and/or genre data may be provided as metadata in the code of a video game to enable the correct threshold(s) to be selected and updated.

The games console 110 may determine that the standard volume has been manually adjusted at step 504 in one of a number of ways. The standard volume may be adjusted via direct control of the games console 110 itself by the user (e.g. through user instructions received via controller 140 and a suitable menu system). Alternatively, it may be adjusted via control of the display device 100 and/or loudspeaker device 150 (e.g. via a separate remote control (not shown) transmitting user instructions). In this case, there needs to be a way for the games console 110 to determine when the standard volume has been adjusted.

In one example, it is determined based on the perceived volume of sound detected by the microphone 206 of the controller 140. For example, if, within the adjustment time period, it is determined that the perceived volume is changed by more than a predetermined amount (e.g. 5 or 10 dB) and this change is retained (sustained) for a predetermined time period (e.g. e.g. 3, 5, 10 or 20 seconds), it is determined that the standard volume has been adjusted.

Determining whether the change has been retained for a predetermined time period after detection of the change (e.g. if the perceived volume changes from 50 dB to 55 dB and then remains at 55 dB or above for at least the predetermined time period) helps reduce the risk of a temporary reduction in perceived volume not related to the adjustment of the standard volume (e.g. due to an obstacle such as a person temporarily moving between the loudspeaker device 150 and microphone 206) from being mistaken as corresponding to a reduction in the standard volume (thereby improving the accuracy and reliability of the threshold adjustment).

In another example, a signal indicating an instructed change in standard volume may be transmitted from the display device 100 and/or loudspeaker device 150 via a suitable data connection between the display device 100 and/or loudspeaker device 150 and games console 110.

For instance, if the games console 110 is connected to the display device 100 and/or loudspeaker device 150 via an HDMI connection, then a signal indicating an instructed adjustment of the standard volume may be transmitted from the display device and/or loudspeaker device to the games console via the HDMI CEC interface.

Alternatively, for instance, if the display device 100 is a Smart TV or the like able to connect with the games console 110 over a network (e.g. the internet or local area network (LAN)), then a signal indicating an instructed adjustment of the standard volume may be transmitted from the display device to the games console 110 over the network. For example, a suitable software application (app) provided by the maker of the games console may be downloaded onto the display device to enable such communication between the games console and display device over the network. Alternatively, a signal indicating an instructed adjustment of the standard volume may be transmitted from the display device 100 and/or loudspeaker device 150 to the games console 110 via a Bluetooth ^{®} connection or the like.

Instead of, or in addition to, the games console 110 determining at step 502 whether the perceived volume is above or below a threshold based on sound detection by the microphone 206 of the controller 140, one or more other sensors of the controller 140 may be used to determine whether an adjustment of the standard volume is appropriate. For example, output of the motion sensor 208 may be used to determine whether a user is likely to be scared or nervous while playing the video game and to automatically adjust the standard volume (as described at step 503) accordingly.

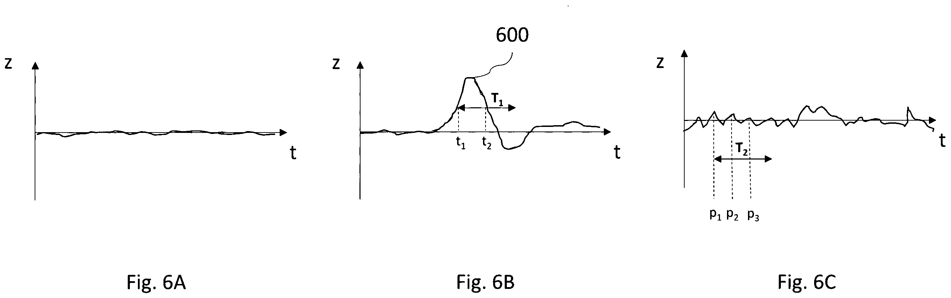

A simplified example of this is shown in Figs. 6A to 6C, which are based on the output of an accelerometer (not shown) of the motion sensor 208 for measuring acceleration in the vertical (z) direction when the controller is held. The output of the accelerometer is sampled at a predetermined frequency and each sample is twice integrated over the sampling time period to determine a current position of the controller in the z direction (relative to an arbitrarily-determined zero value). The position of the controller in the z direction over time t is shown in three different scenarios in Figs. 6A to 6C.

Fig. 6A illustrates a scenario in which the user is relaxed. In this case, motion of the controller 140 in the z direction is small and it is determined there is thus no need to adjust the standard volume.

Fig. 6B, on the other hand, illustrates a scenario in which the user suddenly and involuntarily jumps (as indicated by peak 600) due to, for example, a sudden "scare" in a horror or thriller game. The jump is detected as a sudden increase in the z position of the controller at time t₁ (where the magnitude of the gradient exceeds a first predetermined value) followed, within a predetermined time period T (e.g. 0.5 seconds), by a corresponding sudden decrease in the z position of the controller at time t₂ (where the magnitude of the gradient again exceeds the first predetermined value). The detection of this jump causes the standard volume to be reduced (e.g. by a pre-set amount such as 5, 10, 15 or 20 dB) at step 503.

Fig. 6C illustrates a scenario in which the user is rapidly and involuntarily shaking the controller due to, for example, sustained fear in a horror or thriller game. The shaking is detected as a series of consecutive increases and decreases in the z position of the controller over a predetermined time period T₂ (e.g. 0.5, 1 or 2 seconds). Each consecutive increase and decrease forms a respective peak (p₁, p₂ and p₃). The increase of each peak is detected as an increase with a gradient with a magnitude exceeding a second predetermined value. The decrease of each peak is detected as a decrease with a gradient with a magnitude exceeding the second predetermined value. The second predetermined value of the gradient magnitude be the same or different to the first predetermined value of the gradient magnitude of the example of Fig. 6B.

A detection of shaking occurs when there are a predetermined number of peaks (like peaks p₁, p₂ and p₃) within the predetermined time period T₂. Each peak indicating shaking (like peaks p₁, p₂ and p₃ in Fig. 6C) is distinguished from a peak indicating a jump (like peak 600 in Fig. 6B) based on the height of the peak (with a higher peak indicating a jump and a lower peak indicating a shake). A peak height threshold (e.g. 3, 4 or 5 cm) may be set such that, for a peak with a height greater than or equal to the threshold, the peak is classified as a jump and for a peak with a height less than the threshold, the peak is classified as a shake. A detecting of shaking causes the standard volume to be reduced (e.g. by a pre-set amount such as 5, 10, 15 or 20 dB) at step 503.

Figs. 6A to 6C thus demonstrate how other sensor(s) of the controller 140 (in this example, the motion sensor 208) may be used to learn information about a state of a user and automatically control the video game output (in this example, the standard volume of the video game audio) accordingly. A video game output appropriate to a current state of the user is thus provided, thereby improving the user experience.

In an example, when the standard volume is adjusted based on other sensor(s) of the controller 140 (as exemplified above), the standard volume is adjusted within the constraints of the current upper and lower thresholds of the perceived volume. For example, if the lower threshold of the perceived volume is 50 dB, then the standard volume may be automatically reduced (in response to detecting a user has jumped (Fig. 6B) or is shaking (Fig. 6C)) until the perceived volume reaches 50 dB is reached. After this point, a further volume reduction will only be carried out based on manual volume adjustment by the user (and the lower threshold itself may then be adjusted, as previously described). This provides the benefits of automatic volume adjustment based on a current state of the user while also respecting the perceived volume thresholds tailored to the user, thereby helping ensure the output volume is appropriate to the specific needs of the user.

Although the above examples relate to audio volume control, the present technique is applicable to other characteristics of video game audio and/or visual output in a similar way. For example, instead of, or in addition to, volume control, brightness control (i.e. the perceived output brightness of the display device 100) may be adjusted in a similar way to that described (e.g. with adjustable upper and lower thresholds tailored to individual user profiles) based on the ambient light level (e.g. measured in lux) detected by the light sensor 207. A signal indicative of the detected ambient light level is transmitted from the controller 140 to the games console 110 and the games console 110 then controls the brightness of the display device 100 accordingly (e.g. via HDMI CEC and/or adjusting the pixel luminance values of image frames generated by the games console 110 for display on the display device 100).

This allows, for example, the screen brightness to be automatically adjusted when a user is playing in a dimly lit room (in particular, sufficiently dimly lit that the light output of the display device 100 is able to affect the ambient light level in the room) so the brightness of the display device as perceived by the user (as indicated by the ambient light level measured at the controller 140 held by the user) remains between upper and lower thresholds tailored to the user. This helps allow the user to view the visual content of the video game comfortably and without excessive eye strain. In an example, it is determined that screen brightness is to be adjusted in this way when, for instance, an initial ambient light level as measured at the controller is less than a predetermined activation threshold (e.g. 100 lux or less).

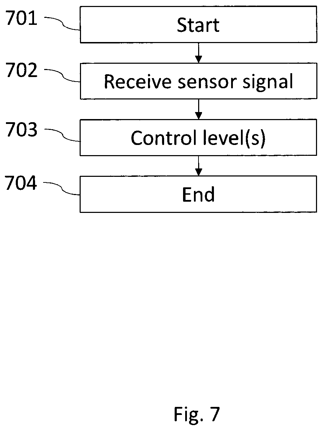

Fig. 7 shows an example method according to the present technique. The method is executed by the CPU 20 and/or GPU 30 of the games console 110, for example.#

The method starts at step 701.

At step 702, a signal is received from a video game control apparatus (e.g. controller 140). The signal represents an output of a sensor (e.g. microphone 206, light sensor 207 or motion sensor 208) of the video game control apparatus for measuring a physical parameter in an environment of the video game control apparatus (e.g. ambient sound level, ambient light level or motion of the control apparatus as it is held in the hand(s) of a user).

At step 703, one or more audio and/or video output levels of the video game (e.g. standard volume output by loudspeaker device 150 and/or brightness level of images output by the display device 100) are controlled based on the received signal.

The method ends at step 704.

Example(s) of the present technique are defined by the following numbered clauses:
1. A data processing apparatus for executing a video game, the data processing apparatus comprising circuitry configured to:
   receive a signal from a video game control apparatus, the signal representing an output of a sensor of the video game control apparatus for measuring a physical parameter in an environment of the video game control apparatus;
   based on the received signal, control one or more audio and/or video output levels of the video game.
2. A data processing apparatus according to clause 1, wherein:
   the received signal represents an output of a microphone of the video game control apparatus; and
   a volume level of audio output of the video game is controlled based on the received signal.
3. A data processing apparatus according to clause 1 or 2, wherein:
   the received signal represents an output of an ambient light sensor of the video game control apparatus; and
   a brightness level of video output of the video game is controlled based on the received signal.
4. A data processing apparatus according to any preceding clause, wherein:
   the one or more audio and/or video output levels of the video game are controlled to be constrained according to one or more thresholds; and
   the one or more thresholds are updatable based on adjustment of the one or more audio and/or video output levels by a user.
5. A data processing apparatus according to clause 4, wherein:
   if, after control to reduce an output level of the one or more audio and/or video output levels to equal a first threshold, the output level is increased or decreased according to an instruction from the user within a predetermined time period, the first threshold is increased or decreased; and
   if, after control to increase an output level of the one or more audio and/or video output levels to equal a second threshold, the output level is increased or decreased according to an instruction from the user within the predetermined time period, the second threshold is increased or decreased.
6. A data processing apparatus according to clause 5, wherein:
   the first threshold is adjusted to equal the increased or decreased output level instructed by the user; and
   the second threshold is adjusted to equal the increased or decreased output level instructed by the user.
7. A data processing apparatus according to clause 5, wherein:
   the first threshold is adjusted to equal an average of a predetermined number of previous increased or decreased output levels instructed by the user; and
   the second threshold is adjusted to equal an average of a predetermined number of previous increased or decreased output levels instructed by the user.
8. A data processing apparatus according to any one of clauses 5 to 7, wherein the circuitry is configured to:
   control the output level by sending a control signal to an external audio and/or video output device; and
   determine that an instruction from the user to increase or decrease the output level has been received from the user by the external audio and/or video output device based on:
      receiving a further signal representing a further output of the sensor of the video game control apparatus, the further signal indicating a sustained change in the measured physical parameter within a predetermined time period after the sending of the control signal to the external audio and/or video output device; or
      receiving a further signal from the external audio and/or video output device indicating the instruction from the user.
9. A data processing apparatus according to clause 8, wherein the further signal from the external audio and/or video output device indicating the instruction from the user is received over a High Definition Multimedia Interface, HDMI, Consumer Electronics Control, CEC, interface, a network or a Bluetooth ^{®} connection.
10. A data processing apparatus according to any one of clauses 5 to 9, wherein the first and second thresholds are associated with a stored user profile of the user.
11. A data processing apparatus according to any preceding clause, wherein:
   the received signal represents an output of a motion sensor of the video game control apparatus; and
   a volume level of audio output of the video game is controlled based on the received signal.
12. A data processing apparatus according to clause 11, wherein the circuitry is configured to:
   determine, based on the received signal, whether a user involuntarily jumps or shakes the video game control apparatus; and
   if it is determined the user involuntarily jumps or shakes the video game control apparatus, control the volume level of audio output of the video game to be reduced.
13. A data processing method for executing a video game, the data processing method comprising:
   receiving a signal from a video game control apparatus, the signal representing an output of a sensor of the video game control apparatus for measuring a physical parameter in an environment of the video game control apparatus;
   based on the received signal, controlling one or more audio and/or video output levels of the video game.
14. A program for controlling a computer to perform a method according to clause 13.
15. A computer-readable storage medium storing a program according to clause 14.

Numerous modifications and variations of the present disclosure are possible in light of the above teachings. It is therefore to be understood that, within the scope of the claims, the disclosure may be practiced otherwise than as specifically described herein.

In so far as embodiments of the disclosure have been described as being implemented, at least in part, by one or more software-controlled information processing apparatuses, it will be appreciated that a machine-readable medium (in particular, a non-transitory machine-readable medium) carrying such software, such as an optical disk, a magnetic disk, semiconductor memory or the like, is also considered to represent an embodiment of the present disclosure. In particular, the present disclosure should be understood to include a non-transitory storage medium comprising code components which cause a computer to perform any of the disclosed method(s).

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more computer processors (e.g. data processors and/or digital signal processors). The elements and components of any embodiment may be physically, functionally and logically implemented in any suitable way. Indeed, the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to these embodiments. Additionally, although a feature may appear to be described in connection with particular embodiments, one skilled in the art would recognize that various features of the described embodiments may be combined in any manner suitable to implement the present disclosure.

## Claims

1. A data processing apparatus for executing a video game, the data processing apparatus comprising circuitry configured to:
receive a signal from a video game control apparatus, the signal representing an output of a sensor of the video game control apparatus for measuring a physical parameter in an environment of the video game control apparatus;
based on the received signal, control one or more audio and/or video output levels of the video game.

2. A data processing apparatus according to claim 1, wherein:
the received signal represents an output of a microphone of the video game control apparatus; and
a volume level of audio output of the video game is controlled based on the received signal.

3. A data processing apparatus according to claim 1 or 2, wherein:
the received signal represents an output of an ambient light sensor of the video game control apparatus; and
a brightness level of video output of the video game is controlled based on the received signal.

4. A data processing apparatus according to any preceding claim, wherein:
the one or more audio and/or video output levels of the video game are controlled to be constrained according to one or more thresholds; and
the one or more thresholds are updatable based on adjustment of the one or more audio and/or video output levels by a user.

5. A data processing apparatus according to claim 4, wherein:
if, after control to reduce an output level of the one or more audio and/or video output levels to equal a first threshold, the output level is increased or decreased according to an instruction from the user within a predetermined time period, the first threshold is increased or decreased; and
if, after control to increase an output level of the one or more audio and/or video output levels to equal a second threshold, the output level is increased or decreased according to an instruction from the user within the predetermined time period, the second threshold is increased or decreased.

6. A data processing apparatus according to claim 5, wherein:
the first threshold is adjusted to equal the increased or decreased output level instructed by the user; and
the second threshold is adjusted to equal the increased or decreased output level instructed by the user.

7. A data processing apparatus according to claim 5, wherein:
the first threshold is adjusted to equal an average of a predetermined number of previous increased or decreased output levels instructed by the user; and
the second threshold is adjusted to equal an average of a predetermined number of previous increased or decreased output levels instructed by the user.

8. A data processing apparatus according to any one of claims 5 to 7, wherein the circuitry is configured to:
control the output level by sending a control signal to an external audio and/or video output device; and
determine that an instruction from the user to increase or decrease the output level has been received from the user by the external audio and/or video output device based on:
receiving a further signal representing a further output of the sensor of the video game control apparatus, the further signal indicating a sustained change in the measured physical parameter within a predetermined time period after the sending of the control signal to the external audio and/or video output device; or
receiving a further signal from the external audio and/or video output device indicating the instruction from the user.

9. A data processing apparatus according to claim 8, wherein the further signal from the external audio and/or video output device indicating the instruction from the user is received over a High Definition Multimedia Interface, HDMI, Consumer Electronics Control, CEC, interface, a network or a Bluetooth ^{®} connection.

10. A data processing apparatus according to any one of claims 5 to 9, wherein the first and second thresholds are associated with a stored user profile of the user.

11. A data processing apparatus according to any preceding claim, wherein:
the received signal represents an output of a motion sensor of the video game control apparatus; and
a volume level of audio output of the video game is controlled based on the received signal.

12. A data processing apparatus according to claim 11, wherein the circuitry is configured to:
determine, based on the received signal, whether a user involuntarily jumps or shakes the video game control apparatus; and
if it is determined the user involuntarily jumps or shakes the video game control apparatus, control the volume level of audio output of the video game to be reduced.

13. A data processing method for executing a video game, the data processing method comprising:
receiving a signal from a video game control apparatus, the signal representing an output of a sensor of the video game control apparatus for measuring a physical parameter in an environment of the video game control apparatus;
based on the received signal, controlling one or more audio and/or video output levels of the video game.

14. A program for controlling a computer to perform a method according to claim 13.

15. A computer-readable storage medium storing a program according to claim 14.
